# EUROPEAN PATENT SPECIFICATION

(11) **EP 4 152 254 B1**
(45) Date of publication and mention of the grant of the patent: **24.09.2025**
(21) Application number: 21803947.7
(22) Date of filing: 25.06.2021
(51) Int. Cl.: G06T 7/00, G06T 7/11, G06T 7/62

(54) **TARGET OBJECT POSITIONING METHOD AND APPARATUS, DEVICE, MEDIUM, AND PROGRAM PRODUCT**
ZIELOBJEKTPOSITIONIERUNGSVERFAHREN UND -VORRICHTUNG, VORRICHTUNG, MEDIUM UND PROGRAMMPRODUKT
PROCÉDÉ ET APPAREIL DE POSITIONNEMENT D'OBJET CIBLE, DISPOSITIF, SUPPORT ET PRODUIT-PROGRAMME

(43) Date of publication of application: 22.03.2023
(73) Proprietor: Nuctech Company Limited, TongFang Building Shuangqinglu Haidian District Beijing 100084 (CN); Tsinghua University, Beijing 100084 (CN)
(72) Inventor: ZHANG, Li, Beijing 100084 (CN); TANG, Hu, Beijing 100084 (CN); SUN, Yunda, Beijing 100084 (CN); WANG, Shuo, Beijing 100084 (CN); LI, Xinbin, Beijing 100084 (CN); JIN, Xin, Beijing 100084 (CN)
(74) Representative: Gunzelmann, Rainer
(86) International application number: PCT/CN2021/102460
(87) International publication number: WO 2021/228281

(56) References cited:
- WO-A1-2006/119609
- CN-A- 101 882 319
- CN-A- 102 629 295
- CN-A- 108 459 802
- US-A1- 2009 174 554
- US-A1- 2015 332 448
- US-A1- 2017 323 436
- US-A1- 2017 323 436
- US-A1- 2018 033 150
- US-A1- 2019 244 346

## Description

### TECHNICAL FIELD

Embodiments of the present disclosure relate to a radiation imaging, and in particular, to a method and an apparatus of positioning a target object, a device, a medium and a program product.

### BACKGROUND

When a security check is conducted on a checked baggage, it is necessary to determine whether a target object exists in the checked baggage, and the target object is positioned when the target object exists in the checked baggage. In general, a mutual occlusion between objects in the checked baggage may bring many obstacles to a recognition and positioning of the target object, which may be time-consuming and make a user's operation process more complicated.

US 2018/033150 A1 disclose a method for generating a three-dimensional object image from a three-dimensional image depicting an object and a secondary object, in which: a volume of an object is extracted from a three-dimensional image to generate a three-dimensional object image; the three-dimensional image is projected to generate a two-dimensional image, and a two-dimensional boundary of the object is defined, where the two-dimensional boundary excludes or cuts off at least some of the uninteresting aspects; the two-dimensional boundary is reprojected over the three-dimensional image to generate a three-dimensional boundary, and voxels comprised within the three-dimensional boundary are extracted to generate the three-dimensional object image.

WO 2006/119609 A1 discloses an apparatus and method for implementing a user interface module for use in screening a receptacle to detect therein the presence of one or more prohibited objects, in which an image signal associated with the receptacle conveying information related to the receptacle's contents and a detection signal conveying a presence of at least one prohibited object in the receptacle are received. A user interface module is adapted for displaying first information conveying an image associated with the receptacle on the basis of the image signal. The user interface module is also adapted for displaying, simultaneously with the first information, second information conveying the presence of the prohibited object in the receptacle. The second information is derived at least in part on the basis of the detection signal.

### SUMMARY

According to embodiments of the present disclosure, a method of positioning a target object, a device, a medium and a program product are provided.

According to the present invention, a method of positioning a target object is set forth in claim 1. Preferred embodiments are provided in the dependent claims. In one aspect of the present disclosure, the method of positioning a target object includes: acquiring first three-dimensional volume data of a checked baggage; generating a projected image of the checked baggage in a direction based on the first three-dimensional volume data; segmenting second three-dimensional volume data from the first three-dimensional volume data based on the projected image; determining at least one envelope region for at least one object in the checked baggage based on the second three-dimensional volume data; and determining an envelope region of the target object from the determined at least one envelope region. The above-mentioned determining an envelope region of the target object from the at least one envelope region includes: calculating a priority of each of the at least one envelope region; sequentially displaying the at least one envelope region in an order of the calculated priorities being decreased; and determining an envelope region in the at least one envelope region as the envelope region of the target object based on a second trigger operation for the envelope region in the at least one envelope region. The above-mentioned calculating a priority of each of the at least one envelope region includes: for each of the at least one envelope region, acquiring an attribute parameter of the envelope region; and calculating the priority of the envelope region according to the attribute parameter. The above-mentioned acquiring an attribute parameter of the envelope region includes: calculating a position coordinate of the envelope region in the projected image according to the three-dimensional volume data of the envelope region.

According to embodiments of the present disclosure, the above-mentioned segmenting second three-dimensional volume data from the first three-dimensional volume data based on the projected image includes: forming a two-dimensional effective region in the projected image; extending the two-dimensional effective region in the direction to form a cylindrical three-dimensional region with the two-dimensional effective region as a cross section; and determining three-dimensional volume data for the cylindrical three-dimensional region as the second three-dimensional volume data.

According to embodiments of the present disclosure, the above-mentioned forming a two-dimensional effective region in the projected image includes: acquiring a size parameter for a predetermined shape; and generating, based on a first trigger operation for a designated point in the projected image, the two-dimensional effective region of the predetermined shape centered on the designated point and conforming to the size parameter.

According to embodiments of the present disclosure, the above-mentioned acquiring a size parameter for a predetermined shape includes: acquiring the size parameter for the predetermined shape pre-configured in a configuration table.

According to embodiments of the present disclosure, the above-mentioned acquiring a size parameter for a predetermined shape includes: determining the size parameter for the predetermined shape according to a size parameter for the projected image, so that the size parameter for the predetermined shape is in a predetermined proportion to the size parameter for the projected image.

According to embodiments of the present disclosure, the above-mentioned determining at least one envelope region for at least one object in the checked baggage based on the second three-dimensional volume data includes: segmenting, from the second three-dimensional volume data, at least one set of three-dimensional volume data conforming to a predetermined image feature by using an image recognition algorithm; and determining the at least one envelope region according to the at least one set of three-dimensional volume data.

According to embodiments of the present disclosure, the above-mentioned acquiring an attribute parameter of the envelope region further includes at least one of: calculating a volume of the envelope region according to three-dimensional volume data of the envelope region; and calculating a density of the envelope region according to the three-dimensional volume data of the envelope region.

According to embodiments of the present disclosure, the above-mentioned sequentially displaying the at least one envelope region in an order of the priorities being decreased includes: ranking the at least one envelope region according to the order of the priorities being decreased, so as to obtain a display sequence; displaying starting from a first envelope region in the display sequence; and when an image of an envelope region in the display sequence is displayed, switching, based on a third trigger operation for the envelope region in the display sequence, to display a posterior envelope region of the envelope region in the display sequence; and switching, based on a fourth trigger operation for the envelope region in the display sequence, to display the first envelope region displayed in the display sequence.

According to embodiments of the present disclosure, the above-mentioned method further includes: after determining the envelope region in the at least one envelope region as the envelope region of the target object, adding a label to the envelope region; and adding and storing three-dimensional volume data of the envelope region in association with the label into a predetermined storage region.

According to embodiments of the present disclosure, the above-mentioned acquiring first three-dimensional volume data of a checked baggage includes: acquiring the first three-dimensional volume data of the checked baggage by using a computed tomography device.

In another aspect of the present disclosure, an electronic device is provided, including a memory and at least one processor. The memory is configured to store instructions. The at least one processor executes the instructions stored in the memory, so as to implement the method as described in any of above-mentioned embodiments.

In another aspect of the present disclosure, a computer-readable storage medium having computer instructions stored thereon is provided, and the computer instructions, when executed by a processor, implement the method as described in any of above-mentioned embodiments.

In another aspect of the present disclosure, a computer program product including executable instructions is provided, and the executable instructions, when executed by a processor, implement the method as described in any of above-mentioned embodiments.

### BRIEF DESCRIPTION OF THE DRAWINGS

In order to better understand embodiments of the present disclosure, embodiments of the present disclosure will be described in detail according to the following accompanying drawings:
FIG. 1 schematically shows an application scenario of a method and an apparatus of positioning a target object according to an embodiment of the present disclosure;
FIG. 2 schematically shows a flowchart of a method of positioning a target object according to an embodiment of the present disclosure;
FIG. 3 schematically shows an example flowchart of a method of positioning a target object according to another embodiment of the present disclosure;
FIG. 4A schematically shows an example diagram of a two-dimensional effective region according to an embodiment of the present disclosure;
FIG. 4B schematically shows an example diagram of a cylindrical three-dimensional region according to an embodiment of the present disclosure;
FIG. 5 schematically shows an example flowchart of a method of positioning a target object according to another embodiment of the present disclosure;
FIG. 6 schematically shows a block diagram of an apparatus of positioning a target object according to an embodiment of the present disclosure; and
FIG. 7 schematically shows a block diagram of an electronic device according to an embodiment of the present disclosure.

### DETAILED DESCRIPTION OF EMBODIMENTS

Specific embodiments of the present disclosure will be described in detail below. It should be noted that embodiments described here are for illustrative purposes only and are not intended to limit embodiments of the present disclosure. In the following descriptions, in order to provide a thorough understanding of embodiments of the present disclosure, a large number of specific details are set forth. However, it is obvious to those skilled in the art that: it is not necessary to implement embodiments of the present disclosure with the specific details. In other examples, well-known structures, materials, or methods are not specifically described to avoid confusion with embodiments of the present disclosure.

Throughout the specification, a reference to "an embodiment", "embodiments", "an example" or "examples" means that: specific features, structures or characteristics described in combination with the embodiment(s) or example(s) are included in at least one embodiment of the present disclosure. Therefore, phrases "in an embodiment", "in embodiments", "an example" or "examples" present throughout the specification do not necessarily refer to the same embodiment or example. In addition, the specific features, structures, or characteristics may be combined in one or more embodiments or examples in any appropriate combination and/or subcombination. In addition, those skilled in the art should understand that a term "and/or" used herein includes any and all combinations of one or more related listed items.

Embodiments of the present disclosure provide a method and an apparatus of positioning a target object, a device, a medium and a program product. The method of positioning the target object may include an acquisition process, a projection process, a segmentation process, a determination process and a positioning process. In the acquisition process, first three-dimensional volume data of a checked baggage is acquired. Then, the projection process is performed, in which a projected image of the checked baggage in a direction is generated based on the first three-dimensional volume data. In the segmentation process, second three-dimensional volume data is segmented from the first three-dimensional volume data based on the projected image. In the determination process, at least one envelope region for at least one object in the checked baggage is determined based on the second three-dimensional volume data. Then, the positioning process is performed, in which an envelope region of the target object is determined from the determined at least one envelope region.

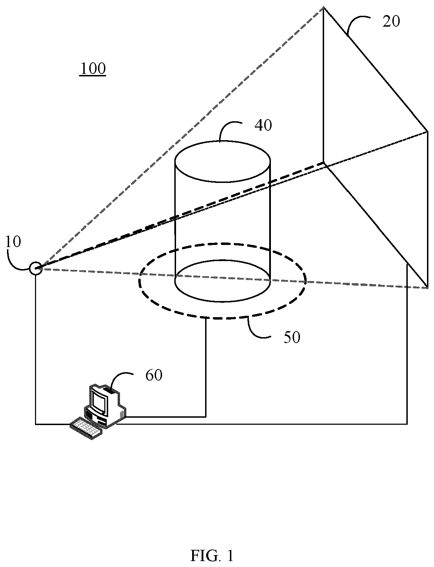

FIG. 1 schematically shows an application scenario of a method and an apparatus of positioning a target object according to an embodiment of the present disclosure. It should be noted that FIG. 1 is only an example of a scenario in which embodiments of the present disclosure may be applied so as to help those skilled in the art understand the technical contents of the present disclosure, but it does not mean that embodiments of the present disclosure may not be applied to other devices, systems, environments or scenarios.

As shown in FIG. 1, the application scenario exemplarily shows a structural diagram of an electronic device 100. In the example, the electronic device 100 is a CT (Computed Tomography) device. In other examples, the electronic device 100 may be a single energy X-ray testing device, a dual energy X-ray testing device, etc. which will not be limited here. According to embodiments of the present disclosure, the CT device 100 may include an X-ray source 10, a mechanical motion device 50, a detector and a data acquisition system 20, and a control and data processing device 60. The CT device 100 is used to perform CT scanning and data processing on a checked object 40, such as a checked baggage, so as to recognize and locate a target object (such as dangerous goods, illegal goods, etc.) in the checked baggage.

The X-ray source 10 may be, for example, an X-ray machine, and an appropriate focus size of the X-ray machine may be selected according to an imaging resolution. In other embodiments, an X-ray beam may be generated by using a linear accelerator or the like instead of using the X-ray machine.

The mechanical motion device 50 includes a stage, a rack, a control system, etc. The stage may be translated to adjust a position of a rotation center, and the rack may be translated to align the X-ray source (X-ray machine) 10, the detector and the rotation center. The embodiment is described according to a circular scanning track or a spiral track of rotating the stage and fixing the rack. Since a movement of the stage and the rack belongs to a relative movement, the method of the embodiment may also be achieved by a way that the stage is stationary and the rack is rotated.

The detector and the data acquisition system 20 include an X-ray detector, a data acquisition circuit, etc. The X-ray detector may use a solid detector, a gas detector or other detectors. However, embodiments of the present disclosure are not limited to this. The data acquisition circuit includes a readout circuit, an acquisition trigger circuit and a data transmission circuit, etc.

The control and data processing device 60 includes, for example, a computer device equipped with a control program and a data processing program. The control and data processing device 60 may be responsible for controlling an operation process of the CT device, including a mechanical translation, a mechanical rotation, an electrical control, a safety interlock control, etc., and may also process collected data.

It should be noted that the method of positioning the target object provided by embodiments of the present disclosure may generally be executed by the control and data processing device 60. Accordingly, the apparatus of positioning the target object provided by embodiments of the present disclosure may be provided in the control and data processing device 60. Alternatively, the method of positioning the target object provided by embodiments of the present disclosure may also be executed by a server or a server cluster that is different from the control and data processing device 60 and capable of communicating with the control and data processing device 60. Accordingly, the apparatus of positioning the target object provided by embodiments of the present disclosure may also be provided in the server or the server cluster that is different from the control and data processing device 60 and capable of communicating with the control and data processing device 60.

Based on the above-mentioned application scenarios, it is desired to determine whether a target object exists in the checked baggage when a security check is conducted on the checked baggage, and the target object is positioned when the target object exists in the checked baggage. In one processing mode, a transparent region in the three-dimensional volume data of the checked baggage is removed by a volume rendering method such as ray casting, the region where the target object is located is selected for multiple times from a plurality of perspectives within a transmission range of different rays, and a bounding box tightly enveloping a suspected object is finally acquired, so as to eliminate an influence of other surrounding regions. Considering that objects in the checked baggage usually overlap each other, a plurality of objects may overlap in a depth direction of any angle of view, so that a region where an object of interest is located may be blocked. During the positioning process, a region where another object overlapping the target object may be selected by mistake, which may bring more obstacles to a correct picking of the region where the target object is located. In order to correctly locate the target object, more times of view angle adjustment may be required, which may be time-consuming and make a user's operation process more complicated, so that an accurate and efficient positioning process may not be achieved.

According to embodiments of the present disclosure, a method of positioning a target object is provided, which may reduce an impact on target object positioning caused by a mutual occlusion of objects in the checked baggage, simplify the user's operation process, and improve an efficiency and an accuracy of the target object positioning. The method will be exemplarily described below through the following drawings. It should be noted that the serial number of each operation in the following method is only used as a representation of the operation for the ease of description, and should not be considered as an execution order of each operation. Unless explicitly indicated, the method does not need to be executed exactly in the order shown.

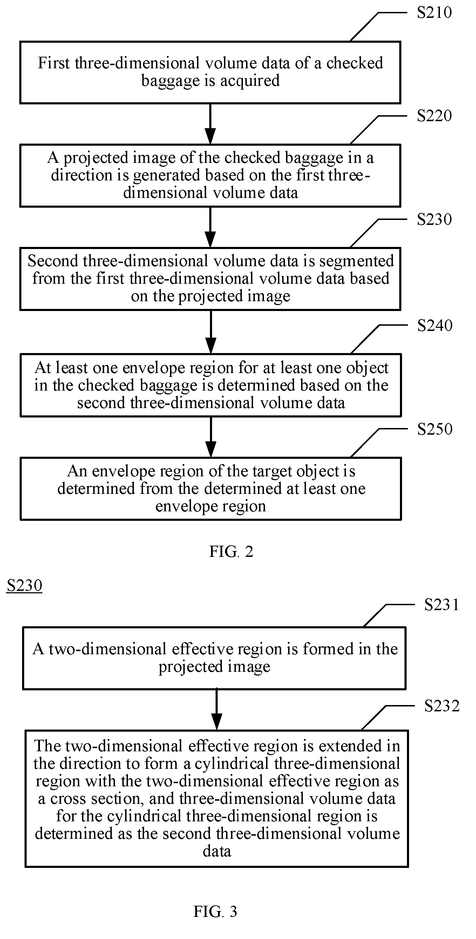

FIG. 2 schematically shows a flowchart of a method of positioning a target object according to an embodiment of the present disclosure.

As shown in FIG. 2, the method may include the following operations S210 to S250.

In operation S210, first three-dimensional volume data of a checked baggage is acquired.

Three-dimensional volume data may be a three-dimensional uniformly distributed data set, that is, a structural data set composed of three-dimensional meshes. The first three-dimensional volume data of the checked baggage may be acquired through a variety of detection methods, such as the above-mentioned computed tomography, X-ray detection technology, etc., which will not be limited here.

In operation S220, a projected image of the checked baggage in a direction is generated based on the first three-dimensional volume data.

The above-mentioned "a direction" may be any direction, and the direction may be selected without any limit. As an example, the projected image may be a DR (Digital Radiography) image.

In operation S230, second three-dimensional volume data is segmented from the first three-dimensional volume data based on the projected image.

In operation S240, at least one envelope region for at least one object in the checked baggage is determined based on the second three-dimensional volume data.

In operation S250, an envelope region of the target object is determined from the determined at least one envelope region.

Those skilled in the art may understand that the method of positioning the target object according to embodiments of the present disclosure may include performing only a projection in a direction based on the first three-dimensional volume data of the checked baggage, and segmenting second three-dimensional volume data of some regions from the first three-dimensional volume data of the checked baggage based on the projected image, so that a positioning range of the target object may be reduced. Furthermore, the envelope region of each of the at least one object contained in the checked baggage is determined based on the second three-dimensional volume data, so as to determine the envelope region of the target object from the at least one envelope region. In the above-mentioned process, it is not necessary to change a viewing angle for multiple times to pick up a region where the target object is located, and it is not necessary to consider whether other objects block the target object in the above-mentioned direction. In addition, a reduction in the positioning range may simplify a positioning process of the target object, and improve an efficiency and an accuracy of target object positioning.

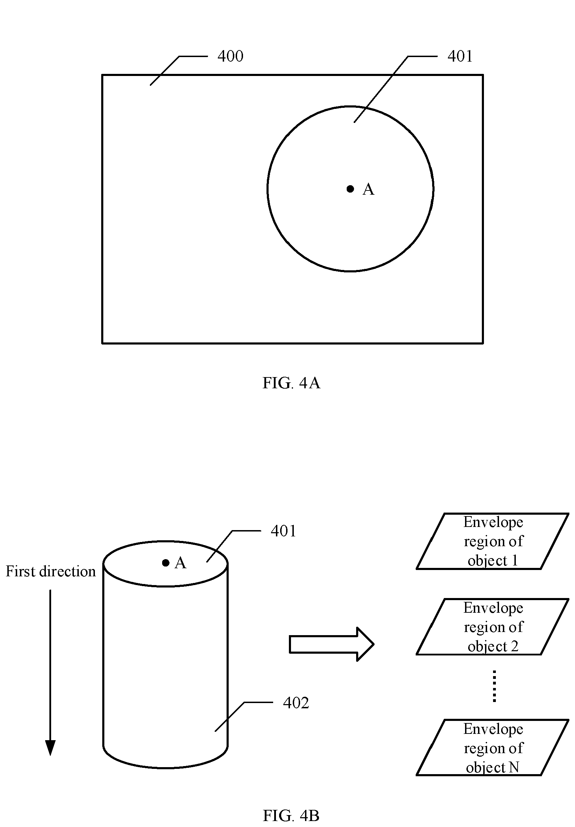

FIG. 3 schematically shows an example flowchart of a method of positioning a target object according to another embodiment of the present disclosure, which is used to illustrate an exemplary implementation process of the above-mentioned operation S230.

As shown in FIG. 3, the above-mentioned process of segmenting second three-dimensional volume data from the first three-dimensional volume data based on the projected image may include operations S231 to S232.

In operation S231, a two-dimensional effective region is formed in the above-mentioned projected image.

As an example, according to embodiments of the present disclosure, the above-mentioned process of forming a two-dimensional effective region in the projected image may include: acquiring a size parameter for a predetermined shape; and generating, based on a first trigger operation for a designated point in the projected image, the two-dimensional effective region of the predetermined shape centered on the designated point and conforming to the size parameter.

FIG. 4A schematically shows an example diagram of a two-dimensional effective region according to an embodiment of the present disclosure. As shown in FIG. 4A, for example, the first trigger operation may be a click operation. After a projected image 400 of the checked baggage in a direction (e.g. a first direction) is generated, the projected image 400 is displayed. It may be understood that in the example shown in FIG. 4, the first direction is perpendicular to a paper surface. When a user thinks that a certain region of the projected image is suspected to be the target object, the user may click any point in the region as a designated point. In response to a user's click operation on a designated point A on the projected image 400, a two-dimensional effective region 401 of the predetermined shape centered on the designated point A and conforming to the size parameter is generated. In the example, the predetermined shape may be a circle, and the size parameter for the predetermined shape is a radius of the circle. In other examples, the predetermined shape may be any shape, such as a rectangle, a triangle, an ellipse, etc. Accordingly, the size parameter for the predetermined shape may include: a length and a width of the rectangle, a side length of the triangle, a major axis and a minor axis of the ellipse, etc., which will not be limited here.

In another embodiment of the present disclosure, the above-mentioned process of forming the two-dimensional effective region in the projected image may also include: forming, based on a user's operation of drawing a closed track in the projected image, a two-dimensional effective region with the closed track as a boundary in the projected image.

According to embodiments of the present disclosure, the above-mentioned process of acquiring the size parameter for the predetermined shape may use a pre-configured size parameter, or may be calculated according to actual detection data. As an example, in one case, the size parameter for the predetermined shape pre-configured may be acquired from a configuration table stored in an electronic device. For example, the configuration table records the following information: a predetermined shape is a circle, a radius is x pixels, and x is a positive integer; or a predetermined shape is a rectangle, a length is y pixels, a width is z pixels, and both y and z are positive integers; etc. In another case, the size parameter for the predetermined shape may be determined according to a size parameter for the projected image, so that the size parameter for the predetermined shape is in a predetermined proportion to the size parameter for the projected image. For example, a projected image of the checked baggage in the first direction has a size of 1024 × 1024 pixels. A predetermined ratio between a radius of the circle and a side length of the projected image is set to be 1/10, and it is estimated that the radius of the circle is 102 pixels. Alternatively, a predetermined ratio between a side length of the rectangle and a side length of the projected image is set to be 1/10, and it is estimated that a length and a width of the rectangle are both 102 pixels. Alternatively, it may also be set that the predetermined ratio represents a ratio between an area of the predetermined shape and an area of the projected image, the area of the predetermined shape may be calculated according to the predetermined ratio and the area of the projected image, and then the size parameter for the predetermined shape may be calculated.

Continuing to refer to FIG. 3, in operation S232, the two-dimensional effective region is extended in the direction to form a cylindrical three-dimensional region with the two-dimensional effective region as a cross section, and three-dimensional volume data for the cylindrical three-dimensional region is determined as the second three-dimensional volume data.

An extension direction of the two-dimensional effective region is consistent with a projection direction (the first direction, following the example above) of the projected image of the checked baggage, which may also be called a depth direction of the projected image.

FIG. 4B schematically shows an example diagram of a cylindrical three-dimensional region according to an embodiment of the present disclosure. As shown on a left side of FIG. 4B, after the two-dimensional effective region 401 is formed, the two-dimensional effective region 401 is extended in the first direction to form a cylindrical three-dimensional region 402 with the two-dimensional effective region 401 as a cross section. In the example, since the two-dimensional effective region 401 is circular, the cylindrical three-dimensional region 402 formed is cylindrical. In other examples, if the two-dimensional effective region 401 is rectangular, the cylindrical three-dimensional region 402 formed is a quadrangular. A cylindrical three-dimensional region formed based on a two-dimensional effective region of another predetermined shape is also set in the same way, which will not be repeated here. In the first three-dimensional volume data of the checked baggage, three-dimensional volume data for the cylindrical three-dimensional region 402 may be used as the second three-dimensional volume data segmented from the first three-dimensional volume data.

The above-mentioned two-dimensional effective region is formed according to the user's first trigger operation for the projected image, which indicates that an actual position of the target object is desired to be in a depth direction of the two-dimensional effective region. Therefore, if the two-dimensional effective region is extended in the depth direction, the cylindrical three-dimensional region formed may contain the region where the target object is located, and the region where the target object is located may not be deleted by mistake while reducing a positioning range. The second three-dimensional volume data for the cylindrical three-dimensional region is used to determine an envelope region of at least one object in the checked baggage, which will be described in detail below.

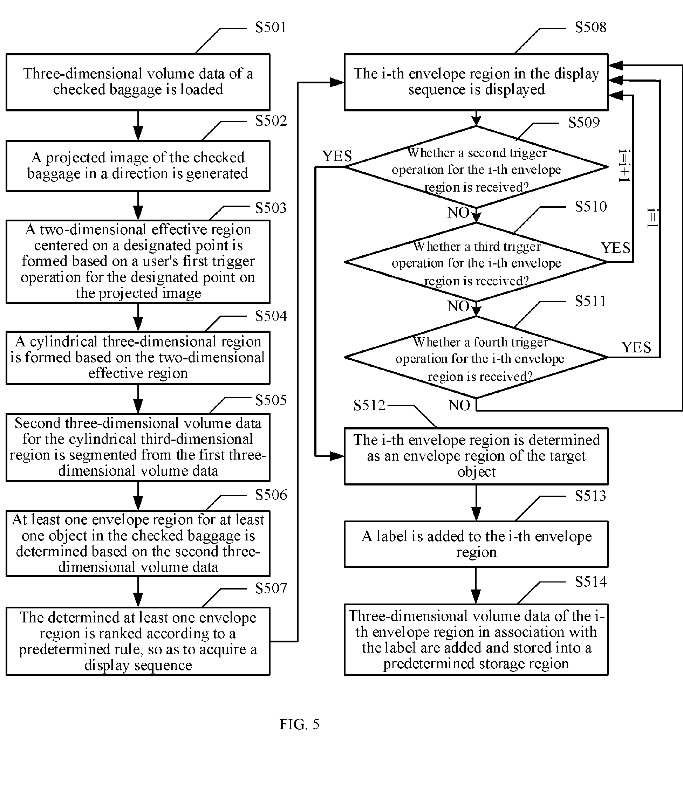

FIG. 5 schematically shows an example flowchart of a method of positioning a target object according to another embodiment of the present disclosure, which is used to illustrate an implementation process of the method of positioning the target object, and is not intended to limit the present disclosure.

As shown in FIG. 5, the method of positioning the target object may include operations S501 to S514.

In operation S501, three-dimensional volume data of a checked baggage is loaded.

The three-dimensional volume data of the checked baggage may be called first three-dimensional volume data, so as to distinguish from the segmented second three-dimensional volume data. After acquiring the first three-dimensional volume data, the first three-dimensional volume data may be loaded into a program product executing the above-mentioned method of positioning the target object.

In operation S502, a projected image of the checked baggage in a direction (e.g. the first direction) is generated.

In operation S503, a two-dimensional effective region centered on a designated point is formed based on a user's first trigger operation for the designated point on the projected image.

According to embodiments of the present disclosure, the embodiment of forming the two-dimensional effective region has been illustrated above, and will not be repeated here.

In operation S504, a cylindrical three-dimensional region is formed based on the two-dimensional effective region.

According to embodiments of the present disclosure, the embodiment of forming the cylindrical three-dimensional region has been illustrated above, and will not be repeated here.

In operation S505, second three-dimensional volume data for the cylindrical three-dimensional region is segmented from the first three-dimensional volume data.

In operation S506, at least one envelope region for at least one object in the checked baggage is determined based on the second three-dimensional volume data.

According to embodiments of the present disclosure, the second three-dimensional volume data is three-dimensional volume data segmenting from the first three-dimensional volume data of the checked baggage and corresponding to the above-mentioned cylindrical three-dimensional region. Therefore, the at least one object determined according to a specific distribution of the second three-dimensional volume data in operation S506 refers to at least one object, in the checked baggage, whose projected image in the first direction is located in the above-mentioned cylindrical three-dimensional region.

As an example, the above-mentioned process of determining at least one envelope region for at least one object in the checked baggage based on the second three-dimensional volume data may include: segmenting, from the second three-dimensional volume data, at least one set of three-dimensional volume data conforming to a predetermined image feature by using an image recognition algorithm; and determining the at least one envelope region according to the at least one set of three-dimensional volume data. In this process, due to a difference between characteristics of three-dimensional volume data corresponding to an object and characteristics of three-dimensional volume data corresponding to a background, the envelope region of each object may be recognized and segmented by using various image recognition algorithms. The present disclosure does not limit the image recognition algorithm. For example, a background region in the second three-dimensional volume data may be filtered through a ray transmission volume rendering method, and the envelope region of each object may be retained and segmented.

As shown in FIG. 4B, for example, an envelope region of an object 1, an envelope region of an object 2, ..., and an envelope region of an object N shown on the right side of FIG. 4B may be segmented according to the second three-dimensional volume data corresponding to the cylindrical three-dimensional region on the left side of FIG. 4B. N is an integer greater than 2.

Continuing to refer to FIG. 5, in operation S507, the determined at least one envelope region is ranked according to a predetermined rule, so as to acquire a display sequence.

According to embodiments of the present disclosure, the above-mentioned predetermined rule is ranking in an order of priorities being decreased. As an example, the above-mentioned process of calculating a priority of each of the at least one envelope region includes: for each of the at least one envelope region, acquiring an attribute parameter of the envelope region; and calculating the priority of the envelope region according to the attribute parameter of the envelope region, wherein the acquiring an attribute parameter of the envelope region includes calculating a position coordinate of the envelope region in the above-mentioned projected image according to the three-dimensional volume data of the envelope region.

For example, the above-mentioned acquiring an attribute parameter of the envelope region includes at least one of: calculating a volume of the envelope region according to three-dimensional volume data of the envelope region; and calculating a density of the envelope region according to the three-dimensional volume data of the envelope region, for example, calculating the density of the envelope region according to a pixel value distribution of the envelope region. The volume of the envelop region may reflect a size and shape of an enveloped object. The density of the envelop region may reflect a density of the enveloped object, thereby reflecting a material of the object. A distance between a centroid and a designated point of the enveloped object in the envelope region on the projected image may be calculated according to the position coordinate of the envelope region in the above-mentioned projected image. One or more of the above-mentioned attribute parameters may represent an attribute feature of an object targeted by the envelope region. On this basis, the above-mentioned process of calculating a priority of the envelope region for an envelope region according to the attribute parameter of the envelope region may include: comparing an attribute feature of the object 1 with an attribute feature of a desired target object by taking the envelope region of the object 1 as an example. For example, the attribute feature of the object may be expressed in a vector form, and a similarity between the attribute feature of the object 1 and the attribute feature of the desired target object may be calculated to represent a level of similarity between the object 1 and the desired target object. For example, a higher priority is set to an envelope region of an object which has a higher level of similarity with the target object.

Continuing to refer to FIG. 5, in operation S508, the envelope regions in the above-mentioned display sequence are sequentially displayed starting from a first envelope region in the display sequence. For example, there are N envelope regions in a display sequence, and an i-th envelope region in the display sequence is displayed. i is an integer greater than or equal to 1 and less than or equal to N, an initial value of i is 1, and i increases by 1 each time the display is switched. When i=N, the first envelope region is displayed again when the display is switched.

As an example, when the i-th envelope region is displayed, a projected image of the i-th envelope region in a second direction may be displayed. The second direction may be the same as the first direction or different from the first direction, which will not be limited here. In an example, when the i-th envelope region is displayed, projected images of the i-th envelope region in a plurality of directions may be displayed, so that the user may identify an object targeted by the i-th envelope region more quickly and accurately.

According to embodiments of the present disclosure, if the envelope regions in the display sequence are arranged in the order of the priorities being decreased, the above-mentioned process of sequentially displaying the envelope regions in the display sequence is a process of sequentially displaying the envelope regions according to the priorities, such that one envelope region in the display sequence is displayed after another envelope region in the display sequence is displayed, wherein the another envelope region in the display sequence has a higher priority than a priority of the one envelope region in the display sequence. In the above-mentioned example, the higher the priority is, the closer the object targeted by the envelope region is to the desired target object, so such display order may enable the user to quickly identify the envelope region of the target object from the display sequence.

Continuing to refer to FIG. 5, in operation S509, whether a user's second trigger operation for the i-th envelope region is received is determined. In a case that the user's second trigger operation for the i-th envelope region is received, operation S512 is performed. In a case that the user's second trigger operation for the i-th envelope region is not received, operation S510 is performed.

In operation S510, whether a user's third trigger operation for the i-th envelope region is received is determined. In a case that the user's third trigger operation for the i-th envelope region is received, the display is switched, i is increased by 1, and the process returns to operation S508. In a case that the user's third trigger operation for the i-th envelope region is not received, operation S511 is performed.

In operation S511, whether a user's fourth trigger operation for the i-th envelope region is received is determined. In a case that user's fourth trigger operation for the i-th envelope region is received, a re-display is performed, i=1 is enabled and the process returns to operation S508. In a case that user's fourth trigger operation for the i-th envelope region is not received, the process returns to operation S508 directly and the i-th envelope region continues to be displayed.

In operation S512, it is determined that the i-th envelope region is an envelope region of the target object.

In operation S513, a label is added to the i-th envelope region.

In operation S514, three-dimensional volume data of the i-th envelope region in association with the label are added and stored into a predetermined storage region. The content of the label may be, for example, a predetermined identifier or identification information, so as to indicate that the three-dimensional volume data stored in associated with the label is three-dimensional volume data of the envelope region of the target object.

The operation S514 stores the three-dimensional volume data of the determined target object in association with the label, which is convenient for a subsequent use. For example, the stored content may be subsequently used as sample data for training an image processing model, etc., and relevant sample data of various target objects may be gradually accumulated in a security inspection process, so that an image processing model with a better performance may be obtained by training.

According to embodiments of the present disclosure, the above-mentioned second trigger operation, third trigger operation and fourth trigger operation may be preset as required. For example, when the i-th envelope region is displayed, a first control and a second control are displayed in association. When the user clicks the first control, it is determined that the first trigger operation is performed on the i-th envelope region. When the user clicks the second control, it is determined that the second trigger operation is performed on the i-th envelope region. Alternatively, a single click operation on the i-th envelope region is the first trigger operation, and a double click operation on the i-th envelope region is the second trigger operation. For another example, clicking a preset number of times continuously in a short preset duration may be used as the fourth trigger operation.

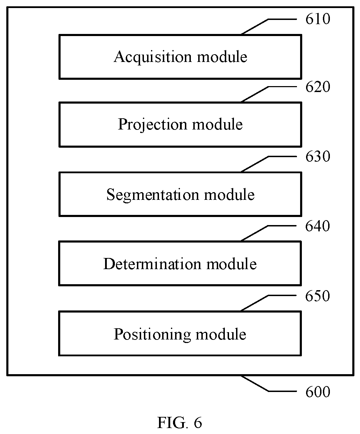

FIG. 6 schematically shows a block diagram of an apparatus of positioning a target object according to an embodiment of the present disclosure.

As shown in FIG. 6, an apparatus 600 of positioning a target object may include: an acquisition module 610, a projection module 620, a segmentation module 630, a determination module 640, and a positioning module 650.

The acquisition module 610 is used to acquire first three-dimensional volume data of a checked baggage.

The projection module 620 is used to generate a projected image of the checked baggage in a direction based on the first three-dimensional volume data.

The segmentation module 630 is used to segment second three-dimensional volume data from the first three-dimensional volume data based on the projected image.

The determination module 640 is used to determine at least one envelope region for at least one object in the checked baggage based on the second three-dimensional volume data.

The positioning module 650 is used to determine an envelope region of the target object from the determined at least one envelope region.

It should be noted that the implementation mode, solved technical problems, achieved functions, and achieved technical effects of each module/unit/subunit in the embodiment of the apparatus portion are the same or similar to the implementation mode, solved technical problems, achieved functions, and achieved technical effects of each corresponding step in the embodiment of the method portion, which will not be repeated here.

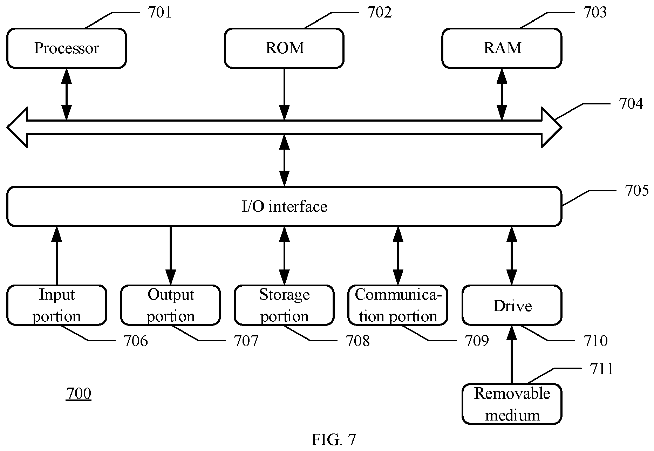

FIG. 7 schematically shows a block diagram of an electronic device according to an embodiment of the present disclosure for implementing the method described above. The device shown in FIG. 7 is only an example, and is not intended to limit the function and scope of use of embodiments of the present disclosure.

As shown in FIG. 7, a device 700 according to embodiments of the present disclosure includes a processor 701, which may perform various appropriate actions and processes according to a program stored in a read only memory (ROM) 702 or a program loaded from a storage portion 708 into a random access memory (RAM) 703. The processor 701 may include, for example, a general-purpose microprocessor (such as a CPU), an instruction set processor and/or a related chipset and/or a dedicated-purpose microprocessor (such as an application specific integrated circuit (ASIC)), etc. The processor 701 may also include an on-board memory for caching purposes. The processor 701 may include a single processing unit or a plurality of processing units for performing different actions of a method flow according to embodiments of the present disclosure.

In the RAM 703, various programs and data required for an operation of the device 700 are stored. The processor 701, the ROM 702 and the RAM 703 are connected to each other via a bus 704. The processor 701 performs various operations of the method flow according to embodiments of the present disclosure by executing programs in the ROM 702 and/or RAM 703. It should be noted that the programs may also be stored in one or more memories other than the ROM 702 and RAM 703. The processor 701 may also perform various operations of the method flow according to embodiments of the present disclosure by executing the programs stored in the one or more memories.

According to embodiments of the present disclosure, the device 700 may also include an input/output (I/O) interface 705, which is also connected to the bus 704. The device 700 may also include one or more of the following components connected to the I/O interface 705: an input portion 706 including a keyboard, a mouse, etc.; an output portion 707 such as a cathode ray tube (CRT), a liquid crystal display (LCD), etc., and a loudspeaker, etc.; a storage portion 708 including a hard disk, etc.; and a communication portion 709 including a network interface card such as a LAN card, a modem, etc.. The communication portion 709 performs communication processing via a network such as the internet. A drive 710 is also connected to the I/O interface 705 as required. A removable medium 711, such as a magnetic disk, optical disk, magneto-optical disk, semiconductor memory, etc., is installed on the drive 710 as required, so that computer programs read therefrom may be installed into the storage portion 708 as required.

According to embodiments of the present disclosure, the method flow according to embodiments of the present disclosure may be implemented as a computer software program. For example, embodiments of the present disclosure include a computer program product, which includes a computer program loaded on a computer-readable storage medium, and the computer program includes a program code for performing the method shown in the flowchart. In the embodiment, the computer program may be downloaded and installed from the network through the communication portion 709, and/or installed from the removable media 711. When the computer program is executed by the processor 701, the above-mentioned functions defined in the system of embodiments of the present disclosure are performed. According to embodiments of the present disclosure, the system, device, apparatus, module, unit and the like as described above may be achieved by a computer program module.

According to embodiments of the present disclosure, the above-mentioned electronic device may be used to achieve the method of positioning the target object according to embodiments of the present disclosure.

The present disclosure further provides a computer-readable storage medium, which may be included in the device/apparatus/system described in the above-mentioned embodiment; the computer-readable storage medium may also exist alone without being assembled into the device/apparatus/system. The above-mentioned computer-readable storage medium carries one or more programs. The one or more programs, when executed, implement the method according to embodiments of the present disclosure.

The flowcharts and block diagrams in the accompanying drawings illustrate possible architectures, functions, and operations of systems, methods, and computer program products according to various embodiments of the present disclosure. In this regard, each block in the flowchart or block diagram may represent a module, program segment, or a portion of a code, and the above-mentioned module, program segment, or portion of the code contains one or more executable instructions for implementing a specified logical function. It should also be noted that in some alternative implementations, functions marked in the block may also occur in a different order from that marked in the drawings. For example, two consecutive blocks may actually be executed substantially in parallel, or they may sometimes be executed in a reverse order, which may depend on the functions involved. It should also be noted that each block in the block diagram or flowchart, and a combination of the blocks in the block diagram or flowchart, may be implemented with a dedicated-purpose hardware based system that performs a specified function or operation, or may be implemented with a combination of a dedicated-purpose hardware and computer instructions.

Those skilled in the art may understand that, although the present disclosure has been shown and described with reference to specific exemplary embodiments of the present disclosure, they should understand that the present disclosure may be changed in form and detail within the scope of the present invention defined by the appended claims.

## Claims

1. A method of positioning a target object, comprising:
acquiring (S210) first three-dimensional volume data of a checked baggage;
generating (S220) a projected image of the checked baggage in a direction based on the first three-dimensional volume data;
segmenting (S230) second three-dimensional volume data from the first three-dimensional volume data based on the projected image;
determining (S240) at least one envelope region for at least one object in the checked baggage based on the second three-dimensional volume data; and
determining (S250) an envelope region of the target object from the at least one envelope region,
**characterized in that**
the determining (S250) an envelope region of the target object from the at least one envelope region comprises:
calculating a priority of each of the at least one envelope region;
sequentially displaying the at least one envelope region in an order of the priorities being decreased; and
determining an envelope region in the at least one envelope region as the envelope region of the target object based on a second trigger operation for the envelope region in the at least one envelope region,
wherein the calculating a priority of each of the at least one envelope region comprises: for each of the at least one envelope region,
acquiring an attribute parameter of the envelope region; and
calculating the priority of the envelope region according to the attribute parameter,
wherein the acquiring an attribute parameter of the envelope region comprises: calculating a position coordinate of the envelope region in the projected image according to the three-dimensional volume data of the envelope region.

2. The method according to claim 1, wherein the segmenting (S230) second three-dimensional volume data from the first three-dimensional volume data based on the projected image comprises:
forming (S231) a two-dimensional effective region in the projected image;
extending (S232) the two-dimensional effective region in the direction to form a cylindrical three-dimensional region with the two-dimensional effective region as a cross section; and
determining (S232) three-dimensional volume data for the cylindrical three-dimensional region as the second three-dimensional volume data.

3. The method according to claim 2, wherein the forming (S231) a two-dimensional effective region in the projected image comprises:
acquiring a size parameter for a predetermined shape; and
generating, based on a first trigger operation for a designated point in the projected image, the two-dimensional effective region of the predetermined shape centered on the designated point and conforming to the size parameter.

4. The method according to claim 3, wherein the acquiring a size parameter for a predetermined shape comprises:
acquiring the size parameter for the predetermined shape pre-configured in a configuration table.

5. The method according to claim 3, wherein the acquiring a size parameter for a predetermined shape comprises:
determining the size parameter for the predetermined shape according to a size parameter for the projected image, so that the size parameter for the predetermined shape is in a predetermined proportion to the size parameter for the projected image.

6. The method according to claim 1, wherein the determining (S240) at least one envelope region for at least one object in the checked baggage based on the second three-dimensional volume data comprises:
segmenting, from the second three-dimensional volume data, at least one set of three-dimensional volume data conforming to a predetermined image feature by using an image recognition algorithm; and
determining the at least one envelope region according to the at least one set of three-dimensional volume data.

7. The method according to claim 1, wherein the acquiring an attribute parameter of the envelope region further comprises at least one of:
calculating a volume of the envelope region according to three-dimensional volume data of the envelope region; and
calculating a density of the envelope region according to the three-dimensional volume data of the envelope region.

8. The method according to claim 1, wherein the sequentially displaying the at least one envelope region in an order of the priorities being decreased comprises:
ranking the at least one envelope region according to the order of the priorities being decreased, so as to obtain a display sequence;
displaying starting from a first envelope region in the display sequence;
and
when an image of an envelope region in the display sequence is displayed,
switching, based on a third trigger operation for the envelope region in the display sequence, to display a posterior envelope region of the envelope region in the display sequence; and
switching, based on a fourth trigger operation for the envelope region in the display sequence, to display the first envelope region in the display sequence.

9. The method according to claim 1, further comprising: after determining (S512) the envelope region in the at least one envelope region as the envelope region of the target object,
adding (S513) a label to the envelope region; and
adding and storing (S514) three-dimensional volume data of the envelope region in association with the label into a predetermined storage region;
wherein the acquiring (S210) first three-dimensional volume data of a checked baggage comprises:
acquiring the first three-dimensional volume data of the checked baggage by using a computed tomography device.

10. An electronic device (700), comprising:
a memory configured to store instructions;
at least one processor;
wherein the at least one processor executes the instructions stored in the memory, so as to implement the method according to one of claims 1 to 9.

11. A computer-readable storage medium (708) having computer instructions stored thereon, wherein the computer instructions, when executed by a processor, implement the method according to one of claims 1 to 9.

12. A computer program product comprising executable instructions, wherein the executable instructions, when executed by a processor, implement the method according to one of claims 1 to 9.

## Patentansprüche

1. Ein Verfahren zur Positionierung eines Zielobjekts, umfassend:
Erfassen (S210) erster dreidimensionaler Volumendaten eines aufgegebenen Gepäcks;
Erzeugen (S220) eines Projektionsbildes des aufgegebenen Gepäcks in einer Richtung basierend auf den ersten dreidimensionalen Volumendaten;
Segmentieren (S230) zweiter dreidimensionaler Volumendaten aus den ersten dreidimensionalen Volumendaten basierend auf dem Projektionsbild;
Bestimmen (S240) mindestens einer Hüllregion für mindestens ein Objekt im aufgegebenen Gepäck basierend auf den zweiten dreidimensionalen Volumendaten; und
Bestimmen (S250) einer Hüllregion des Zielobjekts aus der mindestens einen Hüllregion,
**dadurch gekennzeichnet, dass** das Bestimmen (S250) einer Hüllregion des Zielobjekts aus der mindestens einen Hüllregion umfasst:
Berechnen einer Priorität jeder der mindestens einen Hüllregion;
nacheinander Anzeigen der mindestens einen Hüllregion in einer Reihenfolge mit abnehmenden Prioritäten; und
Bestimmen einer Hüllregion in der mindestens einen Hüllregion als die Hüllregion des Zielobjekts basierend auf einer zweiten Trigger-Operation für die Hüllregion in der mindestens einen Hüllregion,
wobei das Berechnen einer Priorität jeder der mindestens einen Hüllregion umfasst: für jede der mindestens einen Hüllregion,
Erfassen eines Attributparameters der Hüllregion; und
Berechnen der Priorität der Hüllregion gemäß dem Attributparameter,
wobei das Erfassen eines Attributparameters der Hüllregion umfasst: Berechnen einer Positionskoordinate der Hüllregion in dem Projektionsbild gemäß den dreidimensionalen Volumendaten der Hüllregion.

2. Das Verfahren nach Anspruch 1, wobei das Segmentieren (S230) zweiter dreidimensionaler Volumendaten aus den ersten dreidimensionalen Volumendaten basierend auf dem Projektionsbild umfasst:
Bilden (S231) einer zweidimensionalen effektiven Region in dem Projektionsbild;
Erweitern (S232) der zweidimensionalen effektiven Region in der Richtung, um eine zylindrische dreidimensionale Region mit der zweidimensionalen effektiven Region als Querschnitt zu bilden; und
Bestimmen (S232) von dreidimensionalen Volumendaten für die zylindrische dreidimensionale Region als die zweiten dreidimensionalen Volumendaten.

3. Das Verfahren nach Anspruch 2, wobei das Bilden (S231) einer zweidimensionalen effektiven Region in dem Projektionsbild umfasst:
Erfassen eines Größenparameters für eine vorgegebene Form; und
Erzeugen, basierend auf einer ersten Trigger-Operation für einen bezeichneten Punkt in dem Projektionsbild, der zweidimensionalen effektiven Region der vorgegebenen Form zentriert auf dem bezeichneten Punkt und entsprechend dem Größenparameter.

4. Das Verfahren nach Anspruch 3, wobei das Erfassen eines Größenparameters für eine vorgegebene Form umfasst:
Erfassen des Größenparameters für die vorgegebene Form, die vorab in einer Konfigurationstabelle vorkonfiguriert ist.

5. Das Verfahren nach Anspruch 3, wobei das Erfassen eines Größenparameters für eine vorgegebene Form umfasst:
Bestimmen des Größenparameters für die vorgegebene Form entsprechend einem Größenparameter für das Projektionsbild, sodass der Größenparameter für die vorgegebene Form in einem vorbestimmten Verhältnis zu dem Größenparameter für das Projektionsbild steht.

6. Das Verfahren nach Anspruch 1, wobei das Bestimmen (S240) mindestens einer Hüllregion für mindestens ein Objekt in dem aufgegebenen Gepäck basierend auf den zweiten dreidimensionalen Volumendaten umfasst:
Segmentieren, aus den zweiten dreidimensionalen Volumendaten, von mindestens einem Satz dreidimensionaler Volumendaten, der einem vorgegebenen Bildmerkmal entspricht, unter Verwendung eines Bilderkennungsalgorithmus; und
Bestimmen der mindestens einen Hüllregion entsprechend dem mindestens einen Satz dreidimensionaler Volumendaten.

7. Das Verfahren nach Anspruch 1, wobei das Erfassen eines Attributparameters der Hüllregion ferner mindestens eines von Folgendem umfasst:
Berechnen eines Volumens der Hüllregion gemäß dreidimensionalen Volumendaten der Hüllregion; und
Berechnen einer Dichte der Hüllregion gemäß den dreidimensionalen Volumendaten der Hüllregion.

8. Das Verfahren nach Anspruch 1, wobei das nacheinander Anzeigen der mindestens einen Hüllregion in einer Reihenfolge mit abnehmenden Prioritäten umfasst:
Rangordnen der mindestens einen Hüllregion gemäß der Reihenfolge der abnehmenden Prioritäten, um eine Anzeigereihenfolge zu erhalten;
Anzeigen beginnend mit einer ersten Hüllregion in der Anzeigereihenfolge; und
wenn ein Bild einer Hüllregion in der Anzeigereihenfolge angezeigt wird,
Umschalten, basierend auf einer dritten Trigger-Operation für die Hüllregion in der Anzeigereihenfolge, zum Anzeigen einer nachfolgenden Hüllregion der Hüllregion in der Anzeigereihenfolge; und
Umschalten, basierend auf einer vierten Trigger-Operation für die Hüllregion in der Anzeigereihenfolge, zum Anzeigen der ersten Hüllregion in der Anzeigereihenfolge.

9. Das Verfahren nach Anspruch 1, ferner umfassend: nach dem Bestimmen (S512) der Hüllregion in der mindestens einen Hüllregion als der Hüllregion des Zielobjekts,
Hinzufügen (S513) eines Labels zu der Hüllregion; und
Hinzufügen und Speichern (S514) dreidimensionaler Volumendaten der Hüllregion in Zuordnung zu dem Label in einem vorgegebenen Speicherbereich;
wobei das Erfassen (S210) erster dreidimensionaler Volumendaten eines aufgegebenen Gepäcks umfasst:
Erfassen der ersten dreidimensionalen Volumendaten des aufgegebenen Gepäcks mittels eines Computertomographiegeräts.

10. Ein elektronisches Gerät (700), umfassend:
einen Speicher, der zum Speichern von Anweisungen konfiguriert ist;
mindestens einen Prozessor;
wobei der mindestens eine Prozessor die im Speicher gespeicherten Anweisungen ausführt, um das Verfahren gemäß einem der Ansprüche 1 bis 9 zu implementieren.

11. Ein computerlesbares Speichermedium (708) mit darauf gespeicherten Computeranweisungen, wobei die Computeranweisungen, wenn sie von einem Prozessor ausgeführt werden, das Verfahren gemäß einem der Ansprüche 1 bis 9 implementieren.

12. Ein Computerprogrammprodukt umfassend ausführbare Anweisungen, wobei die ausführbaren Anweisungen, wenn sie von einem Prozessor ausgeführt werden, das Verfahren gemäß einem der Ansprüche 1 bis 9 implementieren.

## Revendications

1. Procédé de positionnement d'un objet cible, comprenant:
l'acquisition (S210) de premières données de volume en trois dimensions d'un bagage enregistré;
la génération (S220) d'une image projetée du bagage enregistré dans une direction sur la base des premières données de volume en trois dimensions;
la segmentation (S230) de deuxièmes données de volume en trois dimensions à partir des premières données de volume en trois dimensions sur la base de l'image projetée;
déterminer (S240) au moins une zone d'enveloppe pour au moins un objet dans le bagage enregistré sur la base des deuxièmes données de volume en trois dimensions; et
déterminer (S250) une région de l'enveloppe de l'objet cible à partir d'au moins une région d'enveloppe,
**caractérisé en ce que** la détermination (S250) d'une région de l'enveloppe de l'objet cible à partir d'au moins une région d'enveloppe consiste à:
calculer la priorité de chacune de l'au moins une région d'enveloppe;
afficher séquentiellement l'au moins une région d'enveloppe dans l'ordre des priorités décroissantes; et
déterminer une région d'enveloppe dans l'au moins une région d'enveloppe comme étant la région d'enveloppe de l'objet cible sur la base d'une deuxième opération de déclenchement pour la région d'enveloppe dans l'au moins une région d'enveloppe,
dans lequel le calcul d'une priorité de chacune de l'au moins une région d'enveloppe consiste à: pour chacune de l'au moins une région d'enveloppe,
acquérir un paramètre d'attribut de la région d'enveloppe; et
calculer la priorité de la région d'enveloppe en fonction du paramètre d'attribut,
dans lequel l'acquisition d'un paramètre d'attribut de la région d'enveloppe consiste à: calculer une coordonnée de position de la région d'enveloppe dans l'image projetée en fonction des données de volume en trois dimensions de la région d'enveloppe.

2. Procédé selon la revendication 1, dans lequel la segmentation (S230) des deuxièmes données de volume en trois dimensions à partir des premières données de volume en trois dimensions sur la base de l'image projetée consiste à:
former (S231) une région effective bidimensionnelle dans l'image projetée;
étendre (S232) la région bidimensionnelle effective dans la direction pour former une région en trois dimensions cylindrique, la région bidimensionnelle effective étant une section transversale; et
déterminer (S232) des données de volume en trois dimensions pour la région en trois dimensions cylindrique en tant que deuxièmes données de volume en trois dimensions.

3. Procédé selon la revendication 2, dans lequel la formation (S231) d'une région effective bidimensionnelle dans l'image projetée consiste à:
acquérir un paramètre de taille pour une forme prédéterminée; et
générer, sur la base d'une première opération de déclenchement pour un point désigné dans l'image projetée, la région effective bidimensionnelle de la forme prédéterminée centrée sur le point désigné et conforme au paramètre de taille.

4. Procédé selon la revendication 3, dans lequel l'acquisition d'un paramètre de taille pour une forme prédéterminée consiste à:
acquérir le paramètre de taille pour la forme prédéterminée préconfigurée dans une table de configuration.

5. Procédé selon la revendication 3, dans lequel l'acquisition d'un paramètre de taille pour une forme prédéterminée consiste à:
déterminer le paramètre de taille de la forme prédéterminée en fonction d'un paramètre de taille de l'image projetée, de sorte que le paramètre de taille de la forme prédéterminée soit dans une proportion prédéterminée par rapport au paramètre de taille de l'image projetée.

6. Procédé selon la revendication 1, dans lequel la détermination (S240) d'au moins une région d'enveloppe pour au moins un objet dans le bagage enregistré sur la base des deuxièmes données de volume en trois dimensions consiste à:
segmenter, à partir des secondes données volumiques en trois dimensions, au moins un ensemble de données de volume en trois dimensions conformes à une caractéristique d'image prédéterminée à l'aide d'un algorithme de reconnaissance d'image; et
déterminer l'au moins une région d'enveloppe en fonction de l'au moins un ensemble de données de volume en trois dimensions.

7. Procédé selon la revendication 1, dans lequel l'acquisition d'un paramètre d'attribut de la région d'enveloppe consiste à l'au moins un parmi:
calculer un volume de la région d'enveloppe en fonction des données de volume en trois dimensions de la région d'enveloppe; et
calculer une densité de la région d'enveloppe en fonction des données de volume en trois dimensions de la région d'enveloppe.

8. Procédé selon la revendication 1, dans lequel l'affichage séquentiel de l'au moins une région d'enveloppe dans l'ordre des priorités décroissantes consiste à:
enregistrer l'au moins une région d'enveloppe selon l'ordre de priorités décroissantes, de manière à obtenir une séquence d'affichage;
afficher à partir d'une première région d'enveloppe dans la séquence d'affichage; et
lorsqu'une image d'une région d'enveloppe de la séquence d'affichage est affichée,
commuter, sur la base d'une troisième opération de déclenchement pour la région d'enveloppe dans la séquence d'affichage, pour afficher une région d'enveloppe postérieure de la région d'enveloppe dans la séquence d'affichage; et
commuter, sur la base d'une quatrième opération de déclenchement pour la région d'enveloppe dans la séquence d'affichage, pour afficher la première région d'enveloppe dans la séquence d'affichage.

9. Procédé selon la revendication 1, comprenant en outre: après la détermination (S512) de la région d'enveloppe dans l'au moins une région d'enveloppe comme étant la région d'enveloppe de l'objet cible,
l'ajout (S513) d'une étiquette à la région d'enveloppe; et
l'ajout et le stockage (S514) des données de volume en trois dimensions de la région d'enveloppe en association avec l'étiquette dans une région de stockage prédéterminée;
dans lequel l'acquisition (S210) des premières données de volume en trois dimensions d'un bagage enregistré consiste à:
acquérir les premières données de volume en trois dimensions d'un bagage enregistré à l'aide d'un appareil de tomographie assistée par ordinateur.

10. Dispositif électronique (700), comprenant:
une mémoire configurée pour stocker des instructions;
au moins un processeur; et
dans lequel l'au moins un processeur exécute les instructions stockées dans la mémoire, de manière à mettre en œuvre le procédé selon l'une quelconque des revendications 1 à 9.

11. Support d'enregistrement lisible par ordinateur (708), sur lequel sont stockées des instructions informatiques, les instructions informatiques, lorsqu'elles sont exécutées par un processeur, mettent en œuvre le procédé selon l'une quelconque des revendications 1 à 9.

12. Produit programme informatique comprenant des instructions exécutables, les instructions exécutables, lorsqu'elles sont exécutées par un processeur, mettent en œuvre le procédé selon l'une quelconque des revendications 1 à 9.
